# EUROPEAN PATENT APPLICATION

(11) **EP 2 375 707 A1**
(43) Date of publication of application: **12.10.2011**
(21) Application number: 10158188.2
(22) Date of filing: 29.03.2010
(51) Int. Cl.: H04M 1/2745, G06F 3/048

(54) **Method and Human-to-Machine Interface apparatus for managing contact data with multiple labels**

(71) Applicant: Giga-Byte Technology Co., Ltd., Taipei 231 (TW)
(72) Inventor: Chen, Wei-Ting, 231, Hsin Tien, Taipei County (TW); Lin, Guei-Syuan, 231, Hsin Tien, Taipei County (TW)
(74) Representative: Schwerbrock, Florian

(57) **Abstract**

Managing contacts with multiple labels for quickly finding contacts.
Inputting contacts and labelling one or more labels to said contacts, each label corresponding to a contact group.
Displaying a label list with all labels (and possibly the number of contacts having said label) and a contact list with all contacts.
If a label is selected, displaying the contacts having said selected label, as weil as a new label list containing the labels of all the contacts which are displayed at this stage.
A further selection of a label can reduce the number of displayed contacts.
Input means tor returning to the previous displayed lists.
Upon selection of a displayed contact, corresponding contact data may be displayed. List may be transmitted to computer device, e.g. for back-up.

## Description

### BACKGROUND OF THE INVENTION

### Field of the Invention

The present invention relates to a method for managing contact data and particularly relates to a method and human-to-machine interface apparatus for managing contact data with multiple labels.

### Description of the Related Art

The conventional electronic device such as mobile phone, PDA phone or smartphone is provided with management software for contact data. The management software for contact data normally represents itself with the mode of phone book. And, each contact data is capable of having a plurality of details such as: phone number, title of contact person, one or more corresponding group titles. When the contact data increase in quantity (more than 200 items), the user can utilize the group title to speed the search result. Most of management software for contact data in electronic devices are provided with group sorting, but the operation system in the electronic device or the fixed sorting mode in the phone book perhaps does not suit with every user's memory way or operation habits.

Even if the phone book in electronic device provides a movable mode or a user-defined mode for sorting contact data, the conventional search in a number of contact data is merely aimed at a single group title. The user is unable to further search a single contact data possibly having several groups' features by adding several group labels. Or, in the subsequent search, the user is unable to utilize the image of a specific contact to gradually narrow down the search range by labeled group labels. Therefore, the user still feels difficult and inconvenient to search in a great quantity of contact data.

### BRIEF SUMMARY OF THE INVENTION

Continue what mentioned above, according to the embodiment of the present invention, the present invention provides a method and human-to-machine interface apparatus for managing contact data to solve the above-mentioned problem of searching in a great quantity of contact data. The user can create corresponding contact groups by labeling one or more corresponding labels to contact data. Further, with amounts of contact data corresponding to each label and the user' command to selecting, the search range can be narrowed down quickly. Whereupon, the user can manage a plurality of contact data more intuitively, and in a need for search, to find expected contact data rapidly and efficiently.

According to the embodiment of the present invention, the present invention refers to the method for managing contact data is adapted to an electronic device. The method for managing contact data includes the following steps. First, receive a plurality of contact data and label one or more labels to each contact data. Next, display a label list and all contact data on displayer of the electronic device. Said label list includes all labels and an amounts from present each label corresponding to all contact data. Then, receive a select label command to select a label. Further, according to said selected label, display all the contact data having said selected label and an updated label list on the displayer. Said updated label list includes present displayed labels of all said contact data and an amounts from present each label corresponding to all contact data.

According to the embodiment of the present invention, the present invention refers to the method for managing contact data further includes following steps. First, save a plurality of contact data in a database, and said each label represents a contact group. Besides, receive a contact select command and display a contact data of a contact corresponding to said contact select command.

According to the embodiment of the present invention, after receiving a select label command to select a label, the method of the present invention further includes displaying the selected label list on the displayer. Said selected label list displays orderly whole one or more selected labels and an amounts of contact data corresponding to each selected label. Meanwhile, remove one or more labels of said selected label list from said updated label list. Further, when there is not any label in said updated label list, any select label command will not be received.

According to the embodiment of the present invention, the present invention refers to the method for managing contact data, wherein said contact data includes one or more telephone numbers, a title of contact, and one or more corresponding labels.

According to the embodiment of the present invention, the present invention refers to the method for managing contact data. In the method for managing contact data, when display all the contact data having selected label and a updated label list on the displayer, said method for managing contact data further includes the following steps. First, provide a function for unfolding or folding said label list to allow the user to fold or unfold said updated label list. Further, provide a function for unfolding or folding the contact list to allow the user to fold or unfold said contact data list. Said contact data list displays all the contact data displayed at this stage.

According to the embodiment of the present invention, the present invention refers to the method for managing contact data. In the method for managing contact data, when all the contact data having selected labels and said updated label list are displayed on said displayer, the method for managing contact data further includes following steps. First, provide a function for returning to the previous label list to allow users back to the label list which is before receiving said select label command. Further, provide a function for returning to the selected label list to allow users back to the selected label list which is before receiving the select label command.

According to the embodiment of the present invention, the present invention refers to the method for managing contact data further includes the following steps. First, transmit a plurality of contact data from the database to a computer device, and then users can proceed an adding action, an editing action, a deleting action or a backup action on said contact data. Further, receive a plurality of contact data from said computer device, and save the received contact data in said database.

According to the embodiment of the present invention, the present invention refers to the method for managing contact data further includes that label a contact title of each contact data to a default label; and displaying all contact data on said displayer, then arranging all contact data depending on said default labels;

According to the embodiment of the present invention, the present invention refers to the method for managing contact data further includes that label a prefix of each contact title to a default label; and displaying all contact data on said displayer, then arranging all contact data depending on said default labels.

According to the embodiment of the present invention, the present invention refers to the method for managing contact data. In the method for managing contact data, said electronic device includes PDA, mobile phone, PDA phone, smartphone and handy GPS device.

According to the embodiment of the present invention, the present invention refers to a human-to-machine interface apparatus which is adapted to be installed in an electronic device. Said human-to-machine interface apparatus includes a database, a data-creating module, a command-input module, a data-search module and a data-display module. Said database is used for saving a plurality of contact data, and each contact data is grouped into one or more contact group of contact groups. Said data-creating module is used for receiving a plurality of contact data. Label one or more labels to each contact data. And, each label is corresponding to a contact group. Said command-input module is used for receiving a select label command to select a label. Said data-search module is used for retrieving all contact data having said selected label according to the value of the selected label. Further, said data-display module is used for displaying all labels, a label list where amounts of contact data corresponding to each label at this stage, and all contact data on the displayer of the electronic device. Or, for displaying all contact data having said selected label and a updated label list on the displayer. Said updated label list comprises labels of all contact data displayed at this stage and a amounts of contact data corresponding to each label at this stage.

According to the embodiment of the present invention, the present invention refers to the human-to-machine interface apparatus for managing contact data further includes an input-output module for transmitting a plurality of contact data from the database to the computer device, which enable the user to proceed an adding action, an editing action, a deleting action and a backup action. Further, receive a plurality of contact data from said computer device, and save a plurality of received contact data in said database.

According to the embodiment of the present invention, the present invention refers to a human-to-machine interface apparatus for managing contact date. In the human-to-machine interface apparatus, said electronic device comprises PDA, mobile phone, PDA phone, smartphone and handy GPS device.

Further scope of applicability of the present invention will become apparent from the detailed description given hereinafter. However, it should be understood that the detailed description and detail examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a systematic block diagram of a human-to-machine interface apparatus for managing contact data in accordance with an embodiment of the present invention.
FIG. 2 is a plan schematic view of a database for saving contact data in accordance with an embodiment of the present invention.
FIG. 3A is a plan schematic view of a display interface for contact data in accordance with an embodiment of the present invention.
FIG. 3B is a plan schematic view of another display interface for contact data in accordance with another embodiment of the present invention.
FIG. 4 is a plan schematic view of a display sub-interface for contact data in accordance with an embodiment of the present invention.
FIG. 5 is a plan schematic view of another display sub-interface for contact data in accordance with another embodiment of the present invention.
FIG. 6 is a plan schematic view of a display interface for contact data details in accordance with an embodiment of the present invention.
FIG. 7 is a flow chat of a method for managing contact data in accordance with an embodiment of the present invention.
FIG. 8 is flow chart of another method for managing contact data in accordance with another embodiment of the present invention.

### DETAILED DESCRIPTION OF THE INVENTION

The present invention will now be described in detail with reference to the accompanying drawings. It should be noted that the same reference numerals will be used to identify the same or similar elements throughout the accompanying drawings.

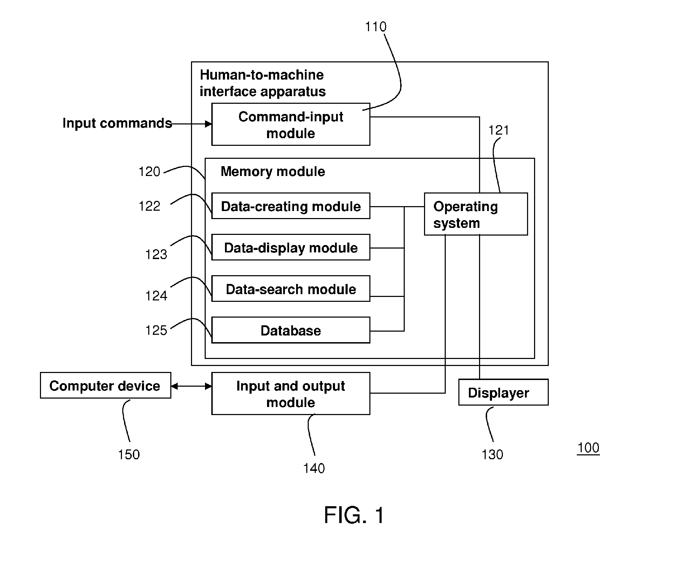

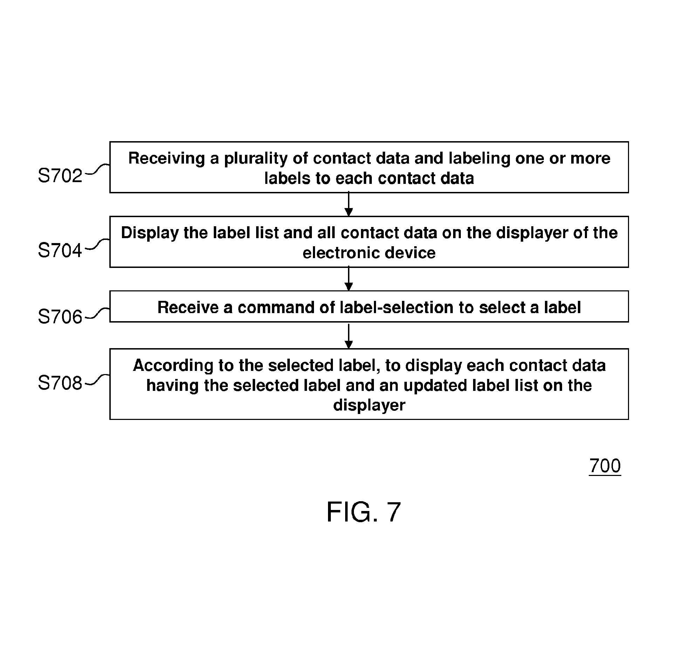

According to an embodiment of the present invention, the invention provides a method and human-to-machine interface apparatus for managing contact. FIG. 1 to FIG. 6 below will introduce said human-to-machine interface apparatus for managing contact data, and FIG. 7 to FIG. 8 will introduce said method for managing contact data.

FIG. 1 is a systematic block diagram of a human-to-machine interface apparatus 100 for managing contact data in accordance with an embodiment of the present invention. Said human-to-machine interface apparatus 100 can be installed in such as PDA, mobile phone, PDA phone, smartphone and electronic device handy GPS device. Referring to FIG. 1, in the embodiment of the present invention, said human-to-machine interface apparatus 100 includes a command-input module 110 and a memory module 120. Said command-input module 110, coupled with said memory module 120, is used for receiving input commands from the user. Said memory module 120 is adapted for saving operating systems, data and software programs. Further, the electronic device equipped to said human-to-machine interface apparatus 100 includes a displayer 130, which is used for displaying a frame needed when executing said operation systems or said software programs.

Continue to refer to FIG. 1, said memory module 120 can include read-only memory and random-access memory. Said memory module 120 can save program modules. When said program module is executed by a processor (not indicated) in the electronic device, it can produce a process or more processes of the media program. Further, said memory module 120 can be a memory device or more memory devices for saving data and software programs; and it can be one or several such as random-access memory, magnetic memory device, FLASH memory storage device or optical storage device. Said processor can provide one or several configuration to execute processor of the program module. Further, said memory module 120 includes an operating system 121, a data-creating module 122, a data-display module 123, a data-search module 124 and a database 125.

Continue to referring to FIG. 1, said operating system 121, coupled with said command-input module 110 and said displayer 130, is used for controlling said data-creating module 122, said data-display module 123, said data-search 124 and said database 125. Said data 125 is used for saving a plurality of contact data, and each contact data is grouped into one or several of contact groups. Data-creating module 122 is used for receiving a plurality of contact data, and the user label one label or more labels to each contact data. Each label corresponds to a contact group. Said command-input module 110 further receives a select label command to select a label. Data-search label 124 is used for retrieving all contact data having selected label according to value of said selected label. Besides, data-display 123 is used for displaying all labels, a label list and all contact data on said displayer 130 of said electronic device. Said label list includes amounts of contact data corresponding to each label displayed at this stage. Or, said data-display module 123 is able to further display each contact data having selected label and an updated label list on said displayer 130. Said updated list is derived from the way of updating original label list with the label which is selected by said select label command. Further, said updated label list includes labels of all contact data displayed at this stage and amounts of contact data corresponding to each label at this stage. All said label list, contact data and labels above-mentioned are accessed from said database 125 by said data-display module 123.

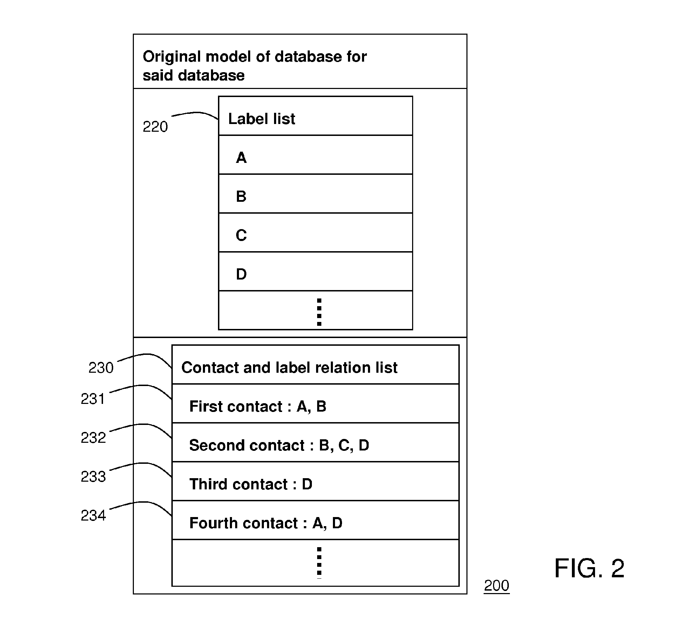

FIG. 2 is plan schematic view of a database 200 for saving contact data in accordance with an embodiment of the present invention. Please refer to FIG. 2, what drawn here is an original model of database for said database 200 relating to contact data, and it is only for displaying the concept. In other embodiments of the present invention, data structure or presentation mode of database can be adjusted according to the practical need in design, so there will be different original model of databases to the one displayed in FIG. 2. After data-creating module 122 receives a plurality of contact data and the user label one or more labels to each contact data, all labels will be saved in label list 220. As FIG. 2 shown, label list 220 includes label A, B, C, and D. Even so, the present invention is not limited to the above, but it further includes that label quantity can be more or less than 4. And each label corresponds to a user-defined contact group or a system-default contact group. Said label A, B, C, and D, only for displaying the concept, could represent English prefix or Chinese prefix, family, customer, friend, classmate, and etc. In the embodiment of the present invention, data-creating module 122 designates the title of each contact as a default label. When displaying all contact data on said displayer 130, data-display module 123 arranges all contact data according to said default label. Further, in other embodiments in accordance with the present invention, data-creating module 122 can further designate a prefix in each title of contact data as a default label. When all contact data displayed on said displayer 130, said data-display module 123 arranges all contact data according to this default label. Said Chinese prefix can be the first word in said title of contact data, such as a family name. Said English prefix can be the first alphabet in said title of contact data. Further, the present invention is not limited to the above, and the labels can be customized flexibly according to the user's need.

Continue to refer to FIG. 2, database 200 further includes a contact and label relation list 230. And this contact and label relation list 230 lists labels corresponding (or labeled) to each contact data in detail. For instance, relation item 231 includes the first contact and his corresponding label A and B; relation item 232 includes the second contact and his corresponding label B, C and D; relation item 233 includes the third contact and his corresponding label D; and, relation item 234 includes the fourth contact and his corresponding label A and D. In other embodiments of the present invention, suppose when the human-to-machine interface apparatus 100 is provided with an operation system 121 as Microsoft Windows Mobile and the contact data display interface or software program is Pocket Outlook, labels labeled to each contact data can be saved in a memo column of each contact data under data structure of Pocket Outlook. Even so, the present invention is not limited to the above, and the first, second, third, and forth contact above-mentioned is only for displaying the concept. Labels corresponding to each contact can be more than above-mentioned label A, B, C, and D, and can exceed 4 contacts in number. Furthermore, the operating system, contact display interface or soft program for managing contact data can be adapted to the human-to-machine interface apparatus 100 can also be other soft programs.

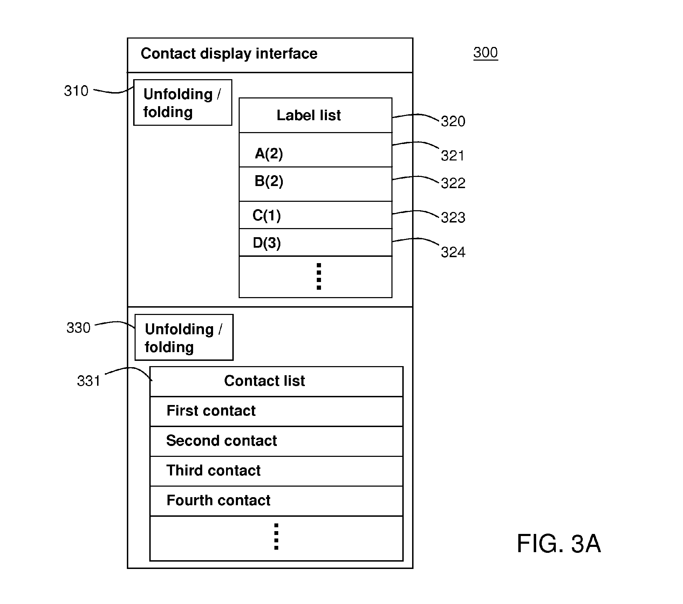

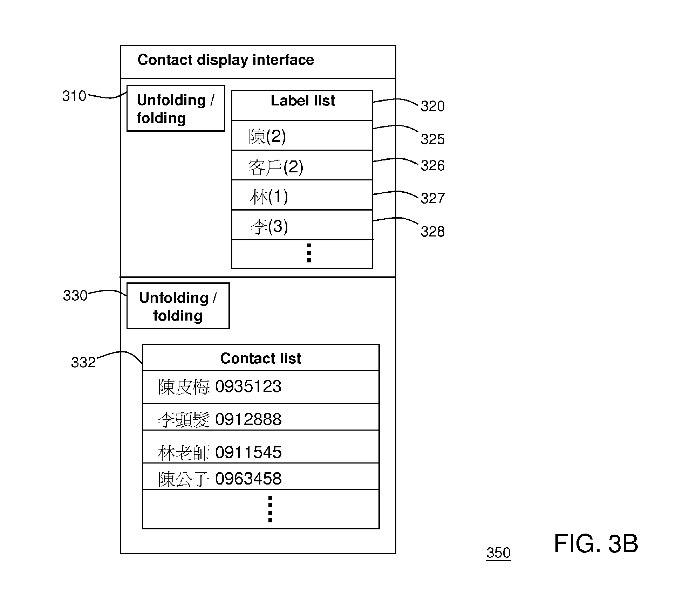

FIG. 3A is a schematic view of a contact display interface 300 in accordance with the embodiment of the present invention. When the user starts software program for managing contact data or switches to the contact display interface 300, the contact display interface 300 can display a status as FIG. 3A shown. Label list 320 includes displaying each label and amounts of contact data corresponding to each label. For instance, label item 321 displays label A having 2 corresponding contact data; label B having 2 corresponding contact data; label C having 1 corresponding contact data; and label D having 3 corresponding contact data. Further, contact display interface 300 provides a function 310 for unfolding or folding label list (or displays a button on the screen of the displayer 130) to allow the user to fold or unfold said label list 320. The contact display interface 300 displays each contact data in a contact list 331 which includes the first, second, third, and fourth contact as shown as FIG. 3A. Moreover, contact display interface 300 further provides a function 330 for unfolding or folding contact list (or displays a button on the screen of the displayer 130) to allow the user to fold contact list 331. The first, second, third, and forth contact above-mentioned are merely for displaying the concept. And, label A, B, C, and D above-mentioned are also merely for displaying the concept. Hereinafter, FIG. 3B will introduce another presentation mode for the contact display interface.

FIG. 3B is a schematic view of another contact display interface 350 in accordance with the embodiment of the present invention. Please refer to FIG. 3B continuously, the label list 320 in the contact display interface 350 includes each label and the amounts of contact data corresponding to each label. For instance, label item 325 displays a label " 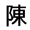 " having 2 corresponding contact data; label " 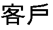 " having 2 corresponding contact data; label " 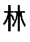 " having 1 corresponding contact data; and label " 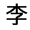 " having 3 corresponding contact data. Contact display interface 350 displays each contact data in contact list 332, as shown as FIG. 3B, said contact list 332 includes 4 contact titles and one telephone number or one of several telephone numbers belongs to each title. For instance, the contact list 332 includes displaying a contact " 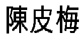 " having a his-owned telephone number "0935123" ; a contact " 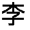 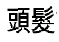 " having a his-owned telephone number "0912888"; a contact " 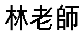 " having a his-owned telephone number "0911545"; and a contact " 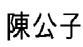 " having a his-owned telephone number "09623458" . Herein each label and contact titles are displayed in Chinese characters. The present invention is not limited to the above, and it can also be displayed in other languages such as English. And, contact list 332 can further adjust the presentation mode according to the user's operating habits and needs.

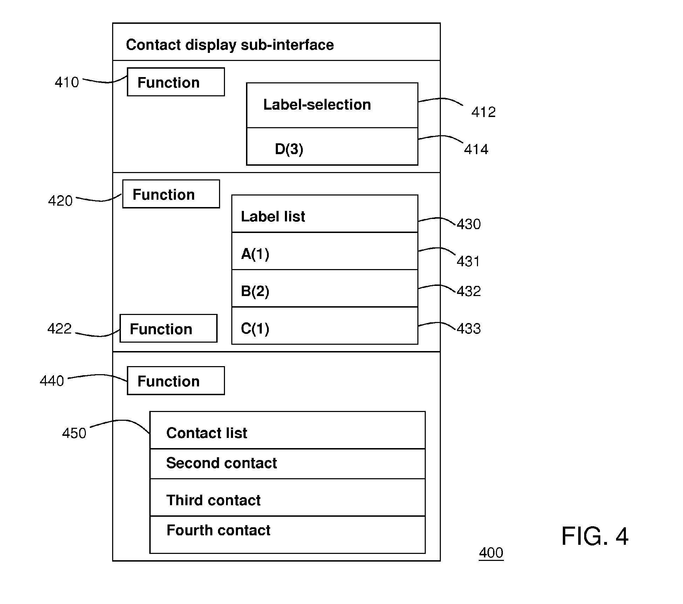

In the embodiment of the present invention, after receiving a select label command to select a label, data-display module 123 displays a selected label list on the displayer 130. Said selected label list will orderly display one or more labels selected and amounts of contact data corresponding to each selected label at the stage. Further, after receiving the select label command to select a label, said data-display module 123 will further remove one or more labels in said selected label list from said updated label list. After that, when there is not any label in said updated label list, the command-input module 110 will not accept any select label command. Hereinafter, FIG. 4 will further introduce that after selecting a label, an arrangement mode for the contact display interface.

FIG. 4 is a schematic view of a contact display sub-interface 400 in accordance with the embodiment of the present invention. Said contact display sub-interface 400 is derived from updating said contact display interface 300 or said contact display interface 350 after the user select a label. For instance, please refer to FIG. 4, suppose that the user selects label D in the contact display interface 300 or in the contact display interface 350. When the data-display module 123 displays each contact data (such as the second, third, fourth contact shown in contact list 450) having said selected label (that is to say, label D) and the updated label list (that is to say, label item 431, 432, and 433 displayed in the label list 430, shown in FIG. 4) in said displayer 130, the data-display module 123 further provides a function 420 for unfolding or folding the label list to allow the user to fold or unfold the updated label list. Meanwhile, the label list 430 only displays labels corresponding to all of contact data having label D. For instance: label item 431 displays label A having 1 corresponding contact data; label item 432 displays label B having 2 corresponding contact data; and label item 433 displays label C having 1 corresponding contact data. Because the selected label is label D, contact data without corresponding label D will be excluded and not be displayed in the contact display sub-interface 400. Meanwhile, contact data corresponding to each label will be updated and displayed according to all contact data displayed in contact list 450.

Further, data-display module 123 provides a function 440 for unfolding or folding the contact list 450 to allow the user to fold or unfold the contact list 450, which presents all contact data displayed at the stage. Furthermore, when the data-display module 123 displays each contact data having the selected label and the updated label list on the displayer 130, the data-display module 123 further provides a function 422 for returning to the previous label list; what allows the user to return to the label list before receiving the select label command (that is to say, the label list 320 in FIG. 3A). Furthermore, data-display module 123 further provides a function 410 for returning to the previous label list, which allows the user to return to the selected label list before receiving the select label command. (In the embodiment, it still returns to the label list 320 in FIG. 3A. Or, when there is no selected label list before accepting the select label command, it displays no selected label list.)

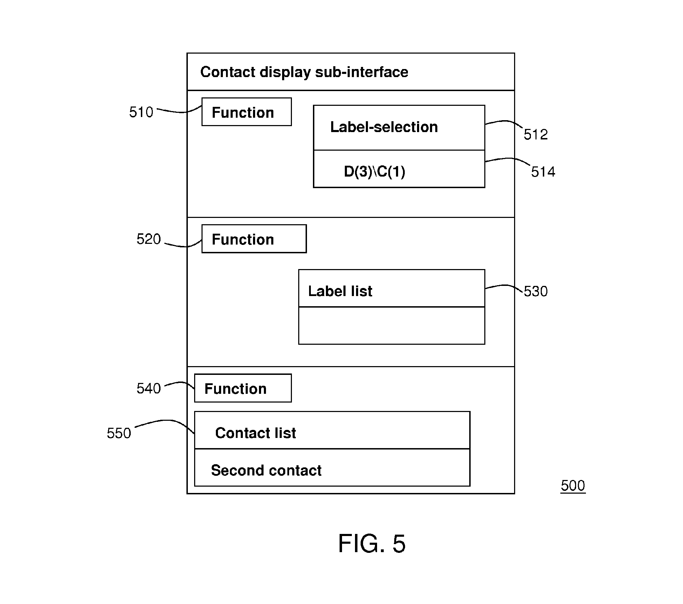

FIG. 5 is a schematic view of another contact display sub-interface 500 in accordance with another embodiment of the present invention. In practice, the contact display sub-interface 500 is newly derived from operation of the contact display sub-interface 400. For instance, please refer to FIG. 5, suppose that the user selects label C in contact display sub-interface 400, and then the contact display sub-interface 500 displays an updated status of the selected label list, the label list, and the contact list. When the data-display module 123 displays each contact data (such as the second contact in contact list 550) having the selected labels (that is to say, label D and label C) and the updated label list (that is to say, the null set or the blank list shown as the label list 530 in FIG. 5) on the displayer 130, the data-display module 123 further provides a function 520 for unfolding or folding the label list to allow the user to fold or unfold the updated label list. For the time being, there is not any label in the label list 530. Because label D and label C are the selected labels, the contact data without corresponding label D and label C will be excluded and not be displayed in the contact display sub-interface 500.

Further, data-display module 123 further provides a function 540 for unfolding and folding the contact list 550 to allow the user to fold or unfold the contact list 550, which presents all contact data displayed at the stage. Further, when the data-display module 123 displays each contact data having the selected labels and the updated label list on the displayer 130, the data-display module 123 further provides a function 522 for returning to the previous label list; what allows the user to return to the label list before receiving the command of the label-selection (that is to say, the label list 430 in FIG 4). Further, data-display 123 further provides a function 510 for returning to the selected label list; what allows the user to return to the selected label list before receiving said select label command. (In the embodiment, that is label list 412 in FIG. 4)

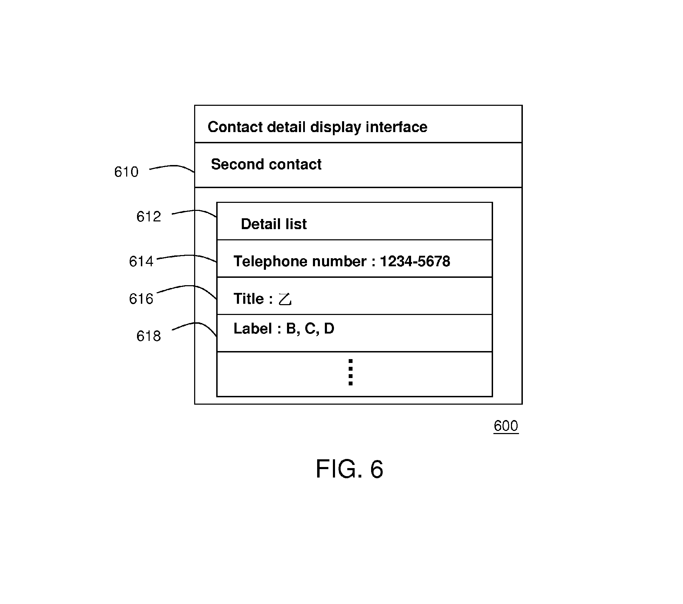

Besides accepting the select label command, the command-input module 110 further receives a command of contact-selection and displays contact data corresponding to the command of contact-selection on the data-display module 123. The contact data includes a phone number, a title of contact data, and one or more corresponding labels. The following accompanying FIG. 6 will introduce a status of contact detail display interface presented by the data-display module 123 after receiving the select label command. FIG. 6 is a schematic view of a contact detail display interface 600 in accordance with the embodiment of the present invention. Please refer to FIG. 6, it supposes that the user selects the second contact, and then, the data-display module 123 will display a contact item 610 as the second contact in the contact detail display interface 600. Further, a detail list 612 in the contact detail display interface 600 will display the second contact in various details. For instance, a detail item 614 displays a telephone number for the second contact is 1234-5678; a detail item 616 displays a title for the second contact is "Z"; and a detail item 618 displays label B, label C, and label D corresponding to the second contact. The present invention is not limited to the above. In other embodiments of the present invention, the detail list 612 in the contact detail display interface 600 can further include other detail items, such as: fax phone number, office phone number, e-mail address, professional title, address, and etc..

Please refer to FIG. 1, the human-to-machine interface apparatus 100 can further transmit a plurality of contact data from said database 125 to a computer device 150 via an input-output module 140 equipped to an electronic device. The user is allowed to proceed an adding action, an editing action, a deleting action, or a backup action. Receiving a plurality of contact data from said computer device 150 and saving a plurality of received contact data in said database 125.

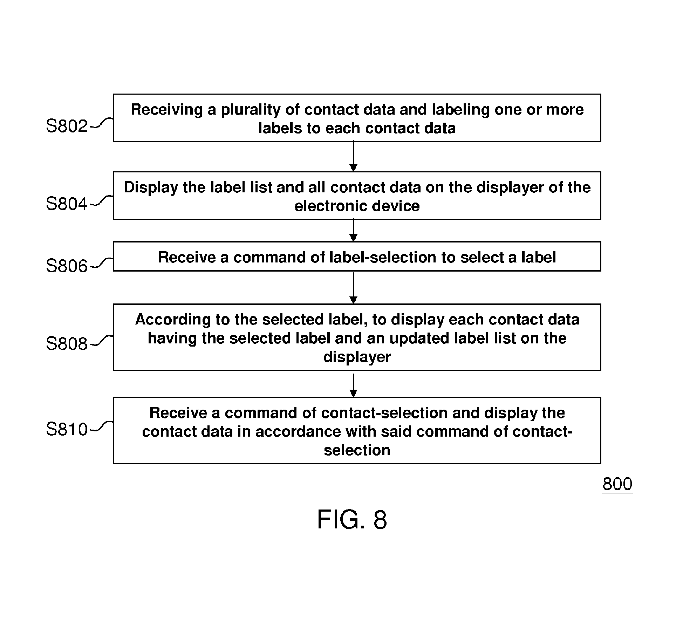

In the embodiment of the present invention, the electronic device equipped to the human-to-machine interface apparatus 100 further includes a touchscreen (not indicated) coupling with the operating system 121. Further, in other embodiments of the present invention, the command-input module 110 and the displayer 130 can be integrated together. Further, the command-input module 110 is capable of receiving the user's command of input via the touchscreen. Furthermore, the user's command of input can be fulfilled by touching the keyboard, touching the virtual keyboard on the touchscreen and etc. Said keyboard can be a physical keyboard assembled on the electronic device, and said virtual keyboard can be a virtual keyboard displayed on the touchscreen of the electronic device. After introducing each essential elements and operating modes of the human-to-machine interface apparatus 100, the following FIG. 7 and FIG. 8 continues to introduce a user interface display mode for the electronic device.

FIG. 7 is a flow chart of a method for managing contact data in accordance with the embodiment of the present invention. Please refer to FIG. 7, in the embodiment of the present invention, a method 700 for managing contact data starts from a step S702, which is receiving a plurality of contact data and labeling one or more labels to each contact data. After the step S702, continue to proceed to a step S704. In the step S704, display the label list and all contact data on the displayer 130 of the electronic device. After the step S704, continue to proceed to step S706. In the step S706, receive a select label command to select a label. After the step S706, continue to proceed to a step S708. In the step 708, according to the selected label, to display each contact data having the selected label and an updated label list on the displayer. After the step S708, it can continue to proceed to any step between the step S702 ~ step S706, that is, proceeding to repeat the cycle of the step S702 ~ step S708 depends to the user's actual need for operating the contact data. Next, the following with FIG. 8 will introduce another method for managing contact data in another embodiment of the present invention.

FIG. 8 is another flow chart of a method for managing contact data in accordance with the embodiment of the present invention. In the embodiment of the present invention, the differences between said method 700 for managing the contact data and the method 800 for managing contact data are further receiving a command of contact-selection and displaying the contact data according to the command of contact-selection. Please refer to FIG. 8, in the embodiment of the present invention, step S802 to step S808 in the method 800 for managing contact data are generally similar to step S702 to step S708 in the method 700 for managing contact data. So, details will not repeat again here. After the step S808, continue to proceed to a step S810. In step S810, to receive a command of contact-selection and display the contact data in accordance with said command of contact-selection. After the step S810, then it can proceed to any step between the step S802 - step S808, that is, proceeding to repeat the cycle of step S802 ∼ step S810 depends on the user's actual need for managing contact data.

To sum up, according to the embodiment of the present invention, the invention provides a method and human-to-machine interface apparatus for managing contact data. By using the method for managing contact data, the user can label one or more labels on contact data to form corresponding contact groups. Further, said human-to machine interface apparatus displays each amount of contact data corresponding to each label. And, with gradually inputting commands of selection by the user, search range will narrow down quickly. In the view of the above, the user can manage a plurality of contact data more intuitively, and finds the expected contact data out rapidly and efficiently in a need for search.

While the invention has been described by way of example and in terms of the preferred embodiment, it is to be understood that the invention is not limited to the disclosed embodiments, and it will be obvious that the same may be varied in many ways. Such variations are not to be regarded as a departure from the spirit and scope of the invention, and all such modifications as would be obvious to one skilled in the art are intended to be included within the scope of the following clams.

## Claims

1. A method for managing contact data is prone to an electronic device, wherein the following steps comprising:
receiving a plurality of contact data, and labeled one or more labels to each contact data;
displaying a label list and all contact date on a displayer of the electronic device, wherein label list includes all labels and a amounts from present each label corresponding to all contact data;
receiving a select label command to select a label;
according to selected label to display all contact data having said selected label and an updated label list on said displayer, wherein said updated label list comprise present displayed labels of all said contact data and a amounts from present each label corresponding to all contact data.

2. A method for managing contact data according to claim 1, wherein also comprising:
saving said contact data in a database, wherein each label represents a contact data group; and
receiving a contact select command and display a contact data of a contact corresponding to said contact select command.

3. A method for managing contact data according to claim 1, wherein after receiving a select label command to select a label, then said method for managing contact data also comprising:
displaying a selected label list on said displayer, wherein said selected label list displayed orderly whole one or more selected label and a amounts from present displayed of each selected label corresponding to contact data; and
removing said label of said selected label list from said updated label list, wherein when said updated label list having not any label, then receiving not any select label command again.

4. A method for managing contact data according to claim 1, wherein said contact data comprise one or more telephone number, a contact title and one or more corresponding label.

5. A method for managing contact data according to claim 1, wherein, when displayed all contact data having said selected label and said updated label list on said displayer, said method for managing contact data also comprising:
providing a function for unfolding and folding said label list to allow the user to fold or unfold said updated label list; and
providing a function for unfolding and folding said contact list to allow the user to fold or unfold said contact list, wherein said contact list displays present displayed of all contact data.

6. A method for managing contact data according to claim 1, wherein also comprising:
transmitting said contact data of said database to a computer device to allow the user to proceed an adding action, an editing action, a deleting action, or a backup action on said contact data; and
receiving a plurality of contact data from said computer device, and saving the received contact data into said database.

7. A method for managing contact data according to claim 1, wherein said electronic device comprises PDA, mobile phone, PDA phone, smart phone, and handy GPS device.

8. A human-to-machine interface apparatus for managing contact data is adapted for an electronic device, comprising:
a database is used for saving a plurality of contact data, and each contact data is grouped into one or more contact group of contact groups;
a data-creating module is used for receiving said contact data and labeling one or more label to each contact data, wherein each label is corresponding to a contact group;
a command-input module is used for receiving a select label command to select a label;
a data-search module is used for retrieving all contact data having said selected label according to the value of selected label; and
a data-display module is used for displaying all labels, a amounts from each label corresponding to all contact data, and all contact data to displayed on a displayer of said electronic device, or then also displaying all contact data having said selected label and an updated label list on said displayer, wherein said updated label list comprise the label of present displayed of all contact data and an amount from present each label corresponding to contact data.

9. A human-to-machine interface apparatus according to claim 8, wherein after receiving a label select command to select a label, said data-display module displays a selected label list on said displayer, wherein said selected label list displaying orderly whole of one or more selected label and an amount from present each label corresponding to contact data, follow, said data-display module removing said label of said selected label list from said updated label list after, follow, when updated label list having not any label, then receiving not any select label command again.

10. A human-to-machine interface apparatus according to claim 8, wherein said contact data comprises one or more telephone numbers, a contact title, and one or more corresponding labels.

11. A human-to-machine interface apparatus according to claim 8, wherein when said data-display module displays all contact data having said selected label and said updated label list on said displayer, said data-display module also provides a function for unfolding and folding said updated label list to allow the user to fold or unfold said updated label list; and provides a function for unfolding and folding contact data list to allow the user to fold or unfold said contact data list, wherein said contact list displays present displayed of all contact data.

12. A human-to-machine interface apparatus according to claim 8, wherein said electronic device further comprises an input-output module, which transmits said contact data from said database to a computer device to allow the user to proceed an adding act, an editing act, a deleting act and a backup act on said contact data, follow, then receives a plurality of contact data from said computer device and saves said received contact data to said database.

13. A human-to-machine interface apparatus according to claim 8, wherein said data-creating module labels a contact title of each contact data to a default label; and
said data-display module displays all contact data on said displayer, then arrange all contact data according to said default label.

14. A human-to-machine interface apparatus according to claim 13, wherein said data-creating module labels a prefix of a contact title to a default label; and
said data-display module displays all contact data on said displayer, then arrange all contact data according to said default label.

15. A human-to-machine interface apparatus according to claim 8, wherein said electronic device comprise PDA, mobile phone, PDA phone, smartphone, and handy GPS device.
